# EUROPÄISCHE PATENTANMELDUNG

(11) **EP 4 248 727 A1**
(43) Veröffentlichungstag der Anmeldung: **27.09.2023**
(21) Anmeldenummer: 23162757.1
(22) Anmeldetag: 18.03.2023
(51) Int. Cl.: A01C 23/00

(54) **GÜLLEAUSBRINGUNGSVORRICHTUNG**

(30) Priorität: 22.03.2022 DE 102022000978
(71) Anmelder: Weitenberg, Hubert, 46325 Borken (DE)
(72) Erfinder: Weitenberg, Hubert, 46325 Borken (DE)
(74) Vertreter: Seyer, Roman

(57) **Zusammenfassung**

Es wird eine Gülleausbringvorrichtung mit einem Querverteilungsrohr (8) und mit an diesem befestigten Schlauchpumpen (10) offenbart.

## Beschreibung

Die Erfindung betrifft eine Gülleausbringungsvorrichtung für Güllefahrzeuge ohne Zerkleinerer mit mindestens einem Querverteilungsrohr und an diesem befestigten Schlauchpumpen zum Abpumpen und Dosieren der Gülle.

### Stand der Technik

Aus dem Stand der Technik ist eine Vielzahl von Gülleausbringungsvorrichtungen bekannt.

Zu der Gruppe der in der Vergangenheit üblichen Breitverteiler von Gülle gehören Spritzblech- sowie Prallteller- und Schwenkdüsenverteiler.

Bei den Spritzblech- bzw. Pralltellerverteilern wird die Gülle unter Druck auf die Spritzbleche oder Prallteller aufgebracht, prallt dort breitflächig ab und wird dadurch durch die Luft geschleudert. Bei Schwenkdüsenverteiler verteilt eine schwenkbare Düse die Gülle. Diese Technik war mit zahlreichen negativen Umwelteinflüssen verbunden, außerdem war die Verteilung auf den zu düngenden Feldern nicht gleichmäßig. Die Technik war einfach, benötigte deshalb auch wenige Bauteile, war dadurch leicht zu reinigen und günstig. Der Durchmesser des Ausflussrohres konnte groß sein, sodass Verstopfungen des Systems durch Festkörper in der Gülle selten oder gar nicht auftraten.

Modernere Gülleausbringungsvorrichtungen bringen den Dünger aus Gründen des Umweltschutzes bodennah aus. Am Güllefahrzeug befindet sich regelmäßig ein klappbarer Tragrahmen, häufig bestehend aus einem Mittelteil mit zwei Auslegern. An diesem sind regelmäßig Schläuche oder Rohre befestigt, in die die Gülle vom Güllefahrzeug hineingedrückt oder gepumpt wird. Für das Ausbringen der Gülle auf dem Feld werden dann üblicherweise das Schlitzverfahren, das Schleppschuhverfahren oder das Schleppschlauchverfahren eingesetzt.

Allen modernen Techniken ist gemeinsam, dass die Gülle auf eine Vielzahl von Rohren oder Schläuchen verteilt werden muss, die einen geringeren Durchmesser aufweisen als die Auslassöffnung am Güllefahrzeug. Zum Zwecke der Verteilung in das Leitungssystem wird mindestens ein Verteiler benötigt. Zur Vermeidung von Verstopfungen ist dann auch mindestens ein Zerkleinerer erforderlich, der in der Gülle befindliche Fremdkörper so sehr zerkleinert, dass sie in den Rohren und Schläuchen zu keinen Verstopfungen führen können. Zu diesem Zweck werden in der Gülle befindliche Fremdkörper auf Längen (L) kleiner des kleinsten Leitungsquerschnitts oder Leitungsdurchmessers (D) zerkleinert. Diese Vorrichtungen lassen sich schwer reinigen und verwenden eine größere Anzahl an Bauteilen, die den Preis der gesamten Einheit erhöhen. Sie sind auch schwer.

Zum Zwecke der Kontrolle und Dosierung des Durchflusses der Güllemenge wird in der DE 20 2017 001 292 für ein vorbezeichnetes Verfahren vorgeschlagen, jeden Rohrverteilauslass mit einem steuerbaren Ventil zu versehen. Diese Technik hat den Nachteil, dass zusätzliche elektronische Bauelemente verwendet werden müssen, die schwer zu reinigen sind und weitere Hindernisse für den Durchfluss der Gülle darstellen.

Ein anderer Vorschlag zur Dosierung der Ausflussmengen von Flüssigkeiten, die allerdings keine Feststoffe enthalten, findet sich in der DD 00000254451, in der nachgeordnete Schlauchpumpen und Messsysteme die Dosierung und Kontrolle vornehmen und überwachen.

### Offenbarung der Erfindung

Aufgabe der Erfindung ist es, die beschriebenen Nachteile des Standes der Technik zu vermeiden und insbesondere eine Gülleausbringungsvorrichtung vorzuschlagen, welche mit möglichst wenigen und damit nur wenig den Durchfluss der Gülle behindernden Bauteilen, die deshalb auch leicht zu reinigen ist, ausgestattet ist, die zugleich in der Lage ist, Gülle umweltschonend bodennah auszubringen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Die Gülleausbringungsvorrichtung ist dabei dadurch gekennzeichnet, dass jeweils in der Geschwindigkeit steuerbare Schlauchpumpen, welche sehr weit am Ende des Gülleleitungssystems montiert sind, das Herauspumpen der Gülle aus dem Güllebehälter übernehmen und zugleich die Ausbringungsmenge dosieren können.

Über mindestens eine Zuleitung fließt die Gülle dabei über mindestens eine Einlassöffnung in mindestens ein Querverteilungsrohr, durch dass die Gülle in mehrere Auslassöffnungen des Querverteilungsrohres fließt, an die jeweils eine in der Geschwindigkeit steuerbare Schlauchpumpe angeschlossen ist, wobei das Querverteilungsrohr entweder an einem Tragrahmen befestigt ist oder in einer vorteilhaften Ausgestaltung selbst einen Teil des Tragrahmens bildet.

Der Durchmesser des gesamten Leitungssystems, ausgehend vom Güllebehälter, ist dabei in einer vorteilhaften Ausgestaltung so gestaltet, dass sich der kleinste Durchmesser des gesamten Leistungssystems direkt am Auslass des Güllebehälters befindet. In einer weiteren vorteilhaften Ausgestaltung kann am Anfang des Systems unmittelbar am Güllefahrzeug eine Steinfangmulde und / oder eine Abstreifvorrichtung montiert sein, die den Eingang der Gülleausbringungsvorrichtung freihält. In einer weiteren vorteilhaften Ausgestaltung werden die Umlenkbereiche, in denen die Gülle die Fließrichtung wechselt, abgerundet. Damit speziell längliche Fremdkörper keine Verstopfungen in den Umlenkbereichen des Leitungssystems verursachen, weisen die Umlenkbereiche in einer solchen vorteilhaften Ausgestaltung große Radien auf, wodurch die Länge eines Fremdkörpers größer als der Durchmesser der Leitung, wenigstens bis zu L>1,5 D sein kann. Hierzu können in der vorteilhaften Ausgestaltung trichterförmige Anschlussstücke an die jeweiligen Einlass- und Auslassöffnungen des Querverteilungsrohrs montiert werden. Bei Verwendung einer Steinfangmulde sollten etwaige Auslassöffnungen der Steinfangmulde ebenfalls nach diesem Prinzip gestaltet sein, soweit durch die Steinfangmulde der Güllefluss umgelenkt werden sollte.

In einer weiteren vorteilhaften Ausgestaltung können die Anschlussstücke so gestaltet sein, dass die Strömung im Querverteilungsrohr eine abstreifende Wirkung auf die einlaufende Seite des Stutzens hat. Dabei kann der Abstreifeffekt noch vergrößert werden durch Erhöhen der Fließgeschwindigkeit, zum Beispiel, indem das Querverteilungsrohr an dieser Stelle noch verjüngt wird

In einer weiteren vorteilhaften Ausgestaltung handelt es sich bei dem entweder ersten oder im Falle der Verwendung einer Steinfangmulde zweiten Stück des Leitungssystems um mindestens ein biegbares Element, zum Beispiel einen Schlauch, der die Gülle aufnimmt und in das einteilige oder in einer weiteren vorteilhaften Ausgestaltung mehrteilige, koppelbare Querverteilungsrohr übergibt.

In einer weiteren vorteilhaften Ausgestaltung sind die jeweils in der Geschwindigkeit steuerbare Schlauchpumpen dadurch gekennzeichnet ist, dass an einer rotierenden Achse befestigte, flexible, zum Beispiel federbare Elemente so über den Schlauch der Schlauchpumpe streichen, dass die flexiblen Elemente auf den Schlauch drücken und der Schlauch und die flexiblen Elemente so zueinander angeordnet sind, dass stets mindestens ein flexibles Element den Schlauch durch Zudrücken verschließt. Dabei steuert die Drehgeschwindigkeit der Pumpe die Durchflussmenge und die Flexibilität des Streichelements kann Festkörpern in der Gülle ausweichen und sicher weitertransportieren, ohne sie vorher zerkleinern zu müssen. Die Verwendung einer Schlauchpumpe hat den zusätzlichen Vorteil, dass auch Güllefässer ohne eigene Pumpe verwendet werden können, die mit einer externen Pumpe befüllt werden. Denn die Schlauchpumpen übernehmen sowohl die Dosierung als auch das Herauspumpen der Gülle aus dem Güllebehälter. In einer vorteilhaften Ausgestaltung sind alle Schlauchpumpen an einer einteiligen oder mehrteiligen koppelbaren, in der Drehzahl verstellbaren Antriebswelle angebracht.

In einer anderen Ausgestaltung könnte jede einzelne Schlauchpumpe oder auch mehrere auf einer gemeinsamen Welle angetriebene Schlauchpumpen, die jeweils einen Teilbereich der Querverteilung übernehmen, über einzelne elektrische oder hydraulisch angetriebene und regelbare Motoren angetrieben werden. Dabei sind diese elektronisch ansteuerbar und regelbar. Die Drehzahl der Schlauchpumpen kann dann dem Düngebedarf der jeweiligen Teilfläche angepasst werden, welche zum Beispiel vorher über eine Ertragserfassung oder Ertragskartierung einer Erntemaschine aufgenommen wurde. Diese erfassten Daten dienen dann wiederum zur Regelung der Drehzahl der Schlauchpumpen, um die Querverteilung innerhalb der Arbeitsbreite des Güllegestänges anpassen.

In einer vorteilhaften Ausgestaltung ist das Querverteilungsrohr mit Tragrahmen für den Straßentransport klappbar. Dabei kann jedes klappbare Querverteilungsrohr einzeln mit dem Auslass des Güllefahrzeugs über einen biegsamen Schlauch mit Gülle versorgt werden oder aber das Querverteilungsrohr ist koppelbar ausgebildet und nur ein biegsamer Schlauch versorgt dann das über die gesamte Breite durchgängige Querverteilungsrohr.

In einer vorteilhaften Ausgestaltung wäre auch die vorhandene Antriebswelle für die Schlauchpumpen koppelbar.

In einer vorteilhaften Ausgestaltung sind das Querverteilungsrohr und der Klapprahmen klappbar in einem Mittelteil und zwei Seitenteilen.

Das Mittelteil ist dabei drehbar gestaltet, um dieses in eine Arbeitsstellung oder Transportstellung zu bringen.

In einer weiteren vorteilhaften Ausgestaltung liegt die Drehachse des Mittelteils auf der Antriebswellenachse für die Schlauchpumpen. Denkbar wäre auch die klappbaren Seitenarme teleskopierbar zu gestalten, so dass der Abstand der Schlauchpumpen zueinander so verkürzt wird, dass in Transportstellung die Seitenarme nicht zu weit nach vorne über das Güllefahrzeug hinausragen. Hiermit könnte man größere Arbeitsbreiten darstellen.

In einer vorteilhaften Ausgestaltung könnten auch die jeweils äußeren Schlauchpumpen des Mittelteils teleskopierbar sein um die Transportbreite des Fahrzeuges auf die gesetzlich vorgeschriebene Breite zu bringen.

In einer weiteren vorteilhaften Ausgestaltung weist das Klappgestänge zwei Klappachsen auf, deren Verlauf in der Seitenansicht annähernd horizontal und in der Draufsicht annähernd 45° zur Fahrzeuglängsachse verlaufen. Dadurch können die äußeren Klappteile annähernd um 180° von der Arbeitsstellung in eine Transportstellung gebracht werden. Dabei legen sich die Klapparme durch deren Schwerkraft in eine Transportsicherung/Fanghaken und brauchen deshalb nicht weiter gegen Losklappen gesichert werden.

In vorteilhaften Ausgestaltungen sind die Schlauchpumpen am Ende der Ausflüsse montierbar und verschiebbar angebracht, um sie den Pflanzabständen anzupassen.

In einer weiteren vorteilhaften Ausgestaltung können am Ausgang der Schlauchpumpe Schläuche oder Rohrverteiler, zum Beispiel in der Form von Y-Verteilerstutzen angebracht werden, die die Ausflussmenge an Gülle nochmals auf mindestens zwei Ausflüsse verteilen, wodurch die Anzahl der benötigten Schlauchpumpen reduziert werden kann.

Schließlich kann in einer vorteilhaften Ausgestaltung am Ende eines Ausflusselements ein kleiner Prallteller in unmittelbarer Bodennähe angeordnet werden, sodass die ausgebrachte Gülle erst auf ihn trifft und in unmittelbarer Bodennähe etwas weiter verteilt wird als bei direktem Aufbringen auf das Feld.

In einer weiteren vorteilhaften Ausgestaltung können die Schlauchpumpen einzeln von der Antriebswelle entkoppelt werden, um damit auch Teilbreiten düngen zu können.

In einer weiteren vorteilhaften Ausgestaltung ist der gesamte Tragrahmen drehbar und schleppend an einem Drehgelenk, das am Behälter befestigt ist, aufgehängt. Hierdurch kann das Gülleverteilsystem bei nassen Bedingungen nach oben ausweichen, falls das Fahrzeug in den Boden einsinkt. Dabei wäre auch denkbar, dass der gesamte Tragrahmen mechanisch, hydraulisch oder pneumatisch mit einem Zylinder gegenüber dem Boden vorgespannt wird. Beim Schlitzverfahren oder beim Schleppschuhverfahren kann dann der Schardruck den jeweiligen Bodenverhältnissen angepasst werden.

In einer weiteren vorteilhaften Ausgestaltung ist der gesamte Tragrahmen pendelnd über eine Pendelachse aufgehängt, um bei großen Arbeitsbreiten das Gülleverteilsystem quer zur Fahrtrichtung der Bodenkontur anzupassen.

In einer weiteren vorteilhaften Ausgestaltung sind die jeweils äußeren klappbaren Tragrahmen in einem annähernd senkrecht zu Boden verlaufenden Drehgelenk aufgenommen, das als Anfahrsicherung dienen soll, um zu verhindern, dass beim Anfahren von Hindernissen die Gestänge verbiegen. Als Auslösevorrichtung kann eine Schraube, die in Zugrichtung abgerissen wird oder eine Abscherschraube gewählt werden. Aber auch alle anderen am Markt befindlichen Mechanismen wären denkbar. In einer vorteilhaften Ausgestaltung kann die Anfahrdrehachse kombiniert werden mit einer Einstellbarkeit der klappbaren Tragrahmen zum Fluchten der Antriebsachse und deren Kupplungen für die Schlauchpumpen.

In weiteren vorteilhaften Ausgestaltungen sind die Ausgestaltungen miteinander kombiniert.

### Zeichnungen

Nachfolgend wird die Erfindung unter Bezugnahme auf die anliegenden Zeichnungen anhand bevorzugter Ausführungsformen näher erläutert.

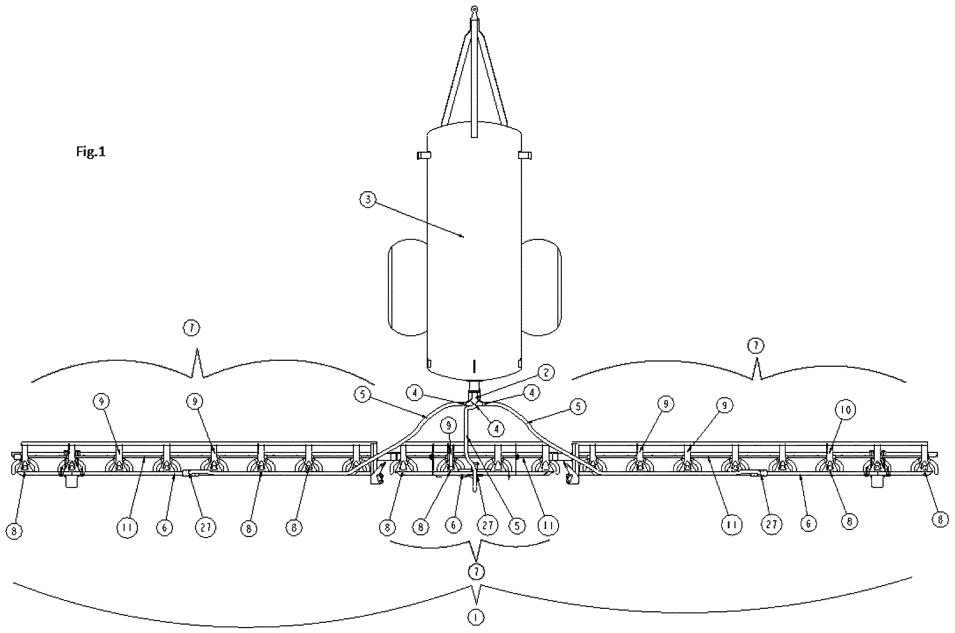

Es zeigen
- Fig. 1: Erfindungsgemäßes Ausführungsbeispiel der Gülleausbringungsvorrichtung (1) in einer schematischen Gesamtansicht, wobei ausgehend von einer Steinfangmulde (2), welche am Auslass des Güllebehälters (3) angebracht ist, die Gülle durch drei Auslauföffnungen (4) der Steinfangmulde (2) in drei an die Auslauföffnungen (4) montierte Schläuche (5) fließt, welche die Gülle an drei Einlassöffnungen (27) in das Querverteilungsrohr (6) leiten, das hier zugleich einen Teil des Tragrahmens (7) bildet, wobei das Querverteilungsrohr (6) wiederum mehrere Auslassöffnungen (8) vorhält, an welche Bauelemente (9) angebracht werden, die in dieser Abbildung nicht sichtbare Schlauchpumpen (10) enthalten, die auf einer Antriebswelle (11) angebracht sind

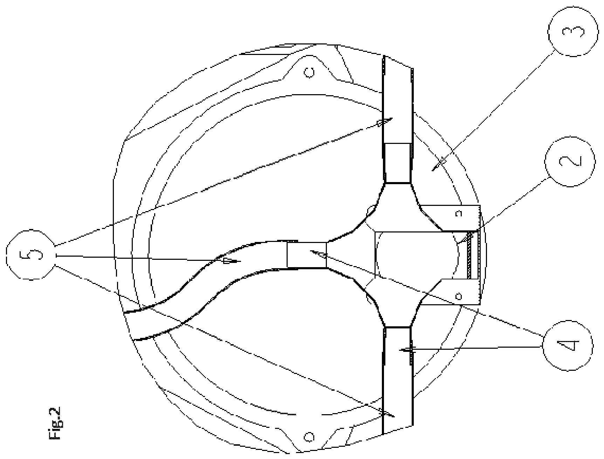

- Fig. 2: eine Detailansicht eines erfindungsgemäßen Ausführungsbeispiels, nämlich eine Ansicht durch die Auslassöffnungen (4) an der Steinfangmulde (2), die so gestaltet sind, dass die Umlenkbereiche eine Trichterform bilden, sodass der Umlenkbereich auf diese Weise weniger verstopfen kann.

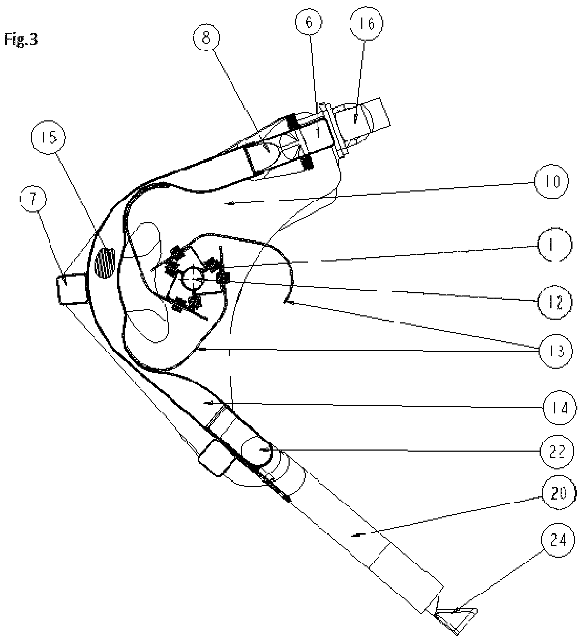

- Fig. 3: eine Detailansicht eines erfindungsgemäßen Ausführungsbeispiels, nämlich einen Querschnitt durch ein Bauelement (9), das eine Schlauchpumpe (10) enthält, wobei an der Achse (12) der Schlauchpumpe (10) federbare Elemente (13) so angebracht sind, dass sie einerseits durch Drehung der Achse so über den Schlauch (14) in der Schlauchpumpe (10) streichen, dass sie den Schlauch (14) verschließen oder öffnen können und dabei die Drehgeschwindigkeit der Achse (12) die Ausflussmenge der Gülle bestimmt und andererseits die Federbarkeit des Streichelements Festkörpern (15) in der Gülle ausweichen und sie zugleich auch weitertransportieren kann.

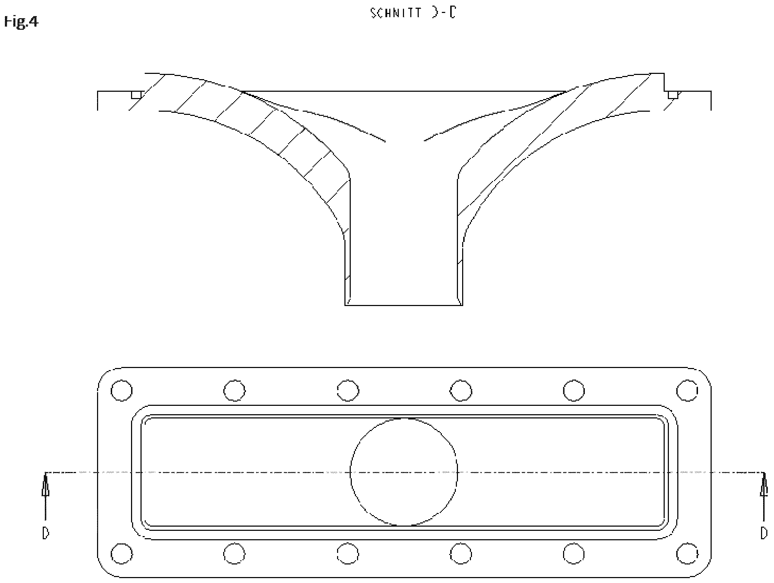

- Fig. 4: eine Detailansicht eines erfindungsgemäßen Ausführungsbeispiels, nämlich ein vorteilhaftes Anschlussstück (16), welches ebenfalls eine Trichterform ausweist, welches sowohl an den Einlass- (27) als auch an den Auslauföffnungen (8) des Querverteilungsrohrs (6) angeschlossen werden kann, sodass die Umlenkbereiche auf diese Weise weniger verstopfen können.

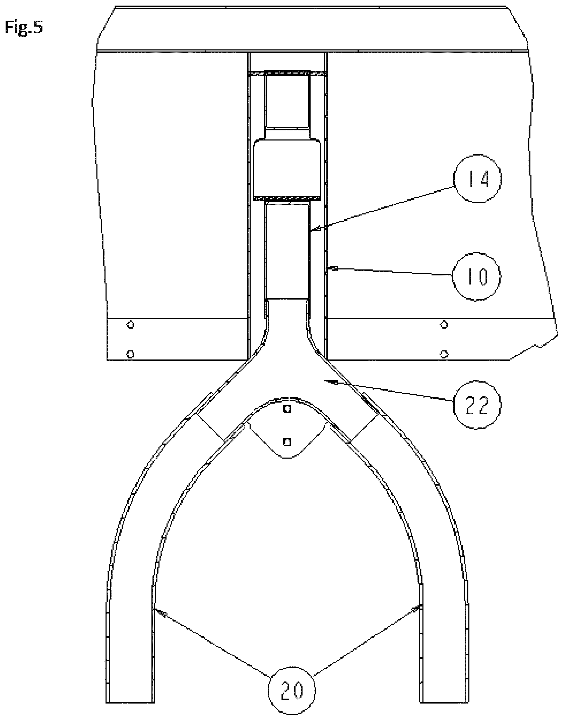

- Fig. 5: eine Detailansicht des Querschnitts durch ein Anschlussstück, nämlich einen Y-Verteilerstutzen (22), der hinter die Schlauchpumpen (10) angeschlossen werden kann, sodass der Güllestrom auf zwei Auslaufstutzen (20) verteilt werden kann, womit weniger Schlauchpumpen (10) verwendet werden müssen

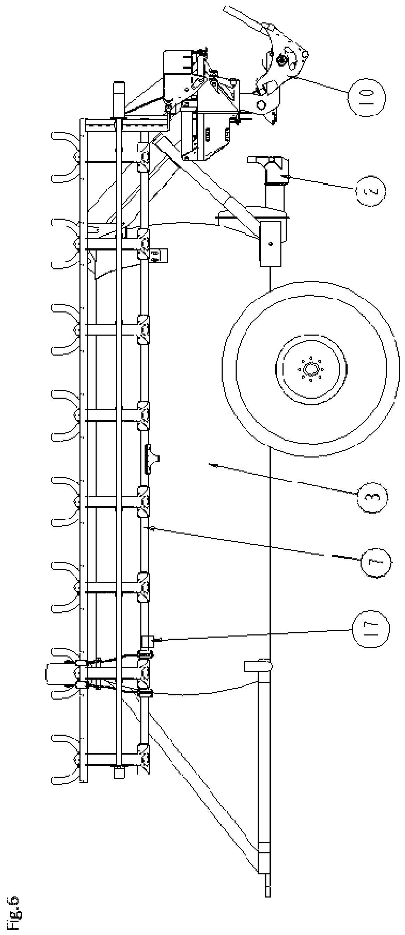

- Fig. 6: eine Seitenansicht der gesamten Gülleausbringungsvorrichtung (1) in geklappter und an den Güllebehälter durch Schwerkraft im Fanghaken (17) arretierter Form

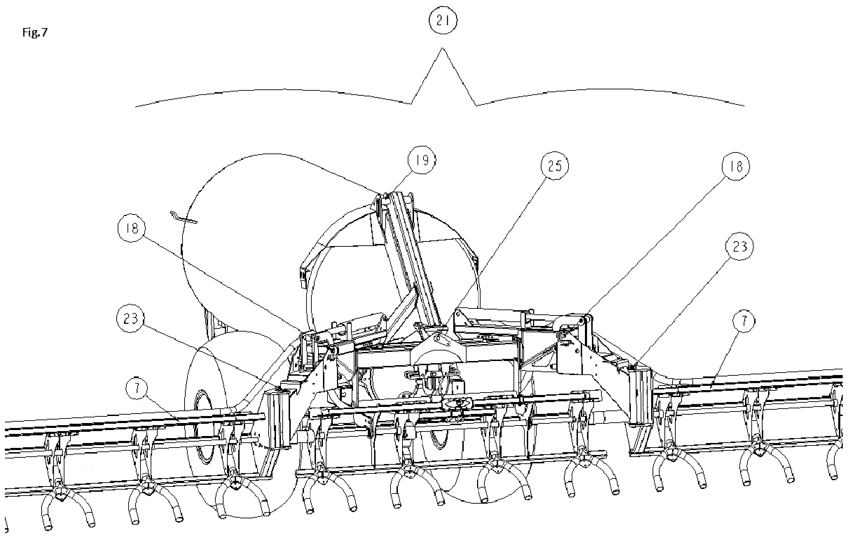

- Fig. 7: eine Ansicht der Klapp- und Drehachsen (18,19,23, 25) des Gesamtsystems

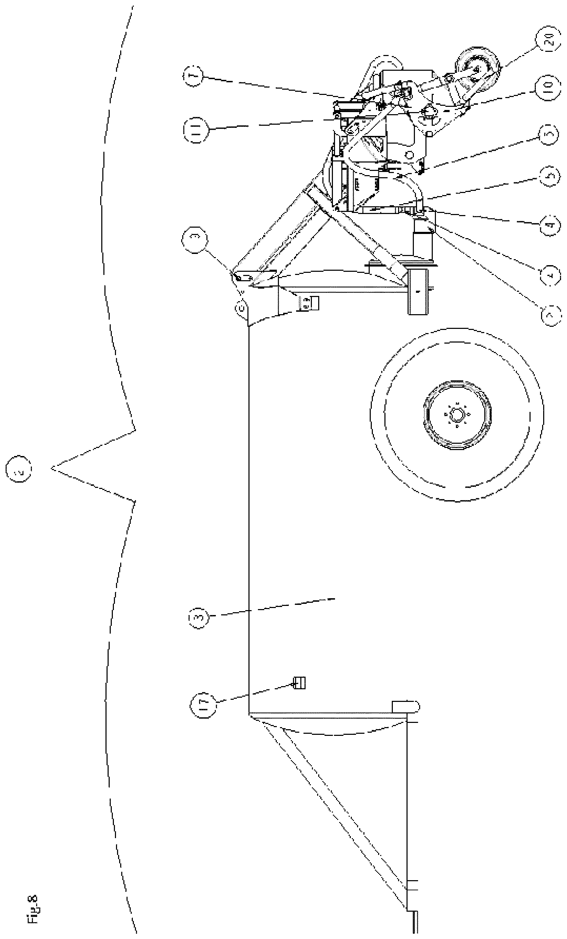

- Fig.8: eine Ansicht des gesamten Güllefahrzeugs mit ausgeklappten Tragarmen in der Seitenansicht

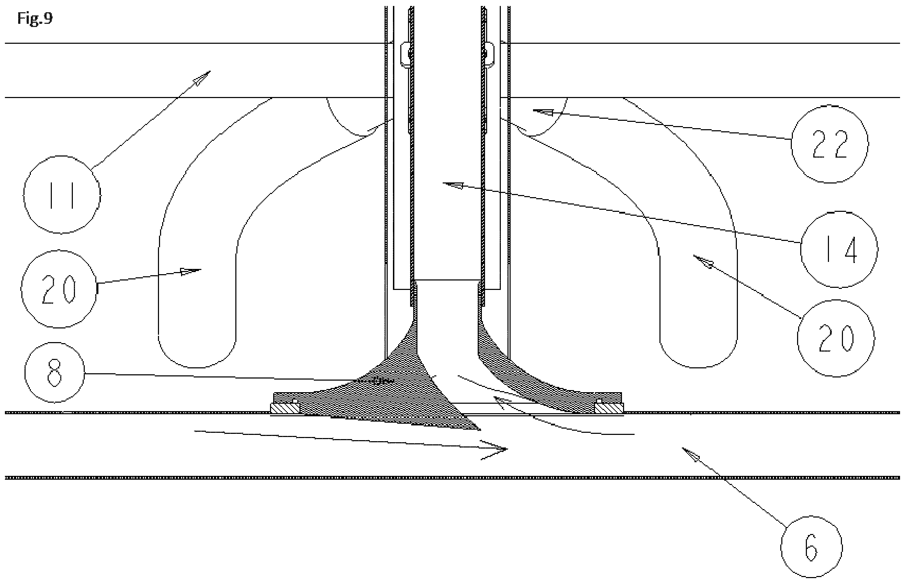

- Fig.9: eine Ansicht eines Anschlussstücks (8) mit abstreifender Wirkung auf die einlaufende Seite des Stutzens.

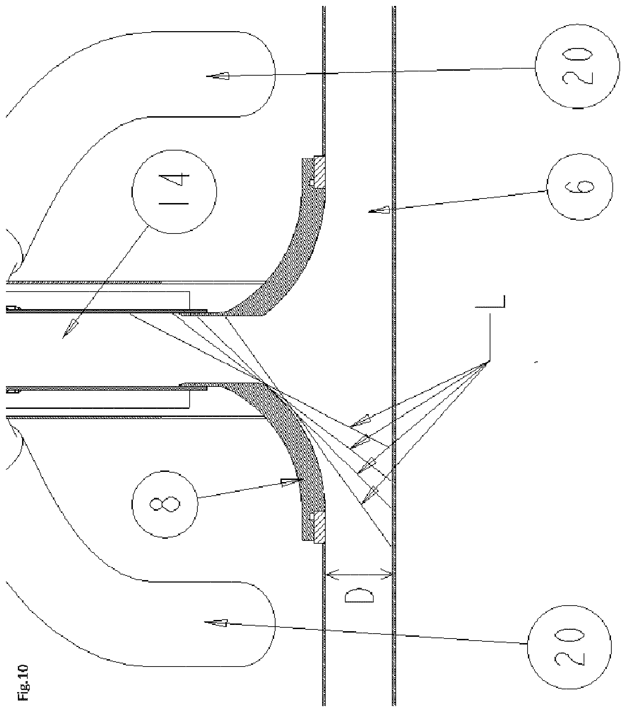

- Fig. 10: eine Ansicht zur Erklärung vom Verhältnis L/D

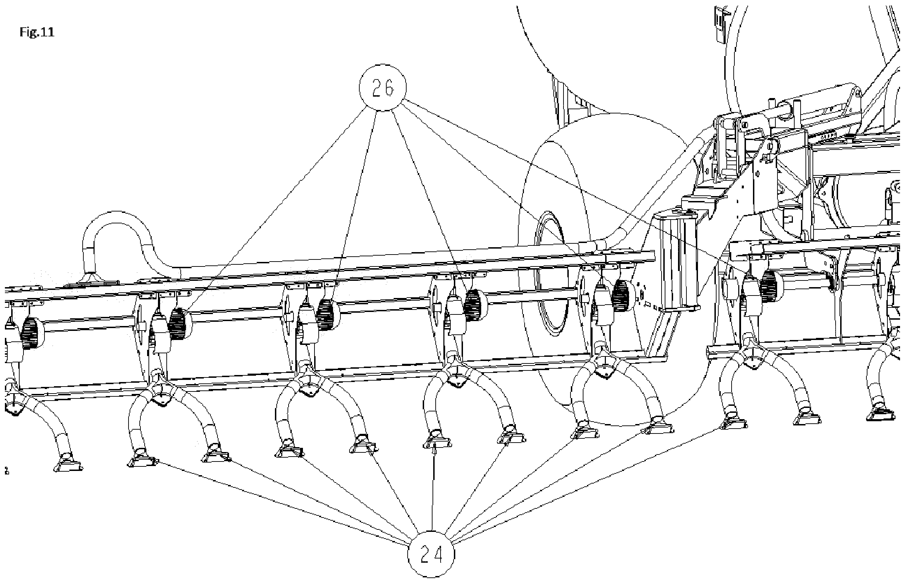

- Fig.11: eine Ansicht mit einzeln angetriebenen Schlauchpumpen (10) mit Antrieben (26), um damit die Querverteilung innerhalb der Arbeitsbreite des Gestänges zu steuern und zu regulieren, wobei ganz am Ende des Leitungssystems noch Prallteller (24) angebracht sind.

1 Gülleausbringungsvorrichtung
2 Steinfangmulde
3 Güllebehälter
4 Auslassöffnungen an der Steinfangmulde
5 Schläuche
6 Querverteilungsrohr
7 Tragrahmen
8 Auslassöffnungen am Querverteilungsrohr
9 Bauelement mit integrierten Schlauchpumpen
10 Schlauchpumpe
11 Antriebswelle
12 Achse der Schlauchpumpe
13 flexibles Element, hier federndes Element
14 Schlauch in der Schlauchpumpe
15 Festkörper in der Gülle
16 Anschlussstück
17 Fanghaken
18 Klappachsen
19 Schleppachse für Tragrahmen
20 Auslaufstutzen
21 Güllefahrzeug
22 Y-Verteilerstutzen
23 Drehachse für Anfahrsicherung
24 Prallteller
25 Pendelachse für Tragrahmen
26 Antriebe
27 Einlassöffnungen am Querverteilungsrohr

## Patentansprüche

1. Gülleausbringvorrichtung (1) zur Ausbringung und Verteilung von Gülle **dadurch gekennzeichnet, dass** die Ausbringmenge über in Bodennähe am Ende des Leitungssystems montierte Schlauchpumpen reguliert wird.

2. Gülleausbringvorrichtung (1) nach Anspruch 1, **dadurch gekennzeichnet** ein Schleppschuh, Schleppschlauch oder Schlitzgerät zur Ausbringung von Gülle verwendet wird.

3. Gülleausbringvorrichtung (1) nach einem der vorstehenden Ansprüche, **dadurch gekennzeichnet, dass** mit einem am Güllefahrzeug (20) quer zur Fahrtrichtung befestigten Tragrahmen (7) ausgehend von der Auslassöffnung des Güllebehälters (3) die Gülle über mindestens eine Leitung (5) in mindestens eine Einlassöffnung (27) mindestens eines Querverteilrohrs (6) geführt wird, das über mehrere, verschließbare Auslauföffnungen (8) verfügt, an die Schlauchpumpen (10) montiert werden können, wobei der Schlauch (14) in der Schlauchpumpe (10) so um eine Achse (12) der Schlauchpumpe (10) herum geführt wird, dass auf die Achse (12) flexible Elemente (13) so montiert werden können, dass beim Drehen der Achse mindestes ein flexibles Element (13) den Schlauch (14) der Schlauchpumpe fest verschließen zugleich aber wegen seiner Flexibilität Festkörpern (15) im Schlauch (14) ausweichen kann.

4. Gülleausbringvorrichtung (1) nach einem der vorstehenden Ansprüche, **dadurch gekennzeichnet, dass** an die Ausflussöffnung des Güllebehälters (3) eine Steinfangmulde (2) montiert ist.

5. Gülleausbringvorrichtung (1) nach einem der vorstehenden Ansprüche, **dadurch gekennzeichnet, dass** das Querverteilungsrohr (6) einen Teil des Tragrahmens bildet.

6. Gülleausbringvorrichtung (1) nach einem der vorstehenden Ansprüche, **dadurch gekennzeichnet, dass** auf die Ein-(27) und Auslassöffnungen (8) des Querverteilungsrohrs (6) jeweils trichterförmige Anschlussstücke (16) montiert werden.

7. Gülleausbringvorrichtung (1) nach einem der vorstehenden Ansprüche, **dadurch gekennzeichnet, dass** die Achsen (12) der Schlauchpumpen (10) auf einer gemeinsamen Antriebswelle (11), deren Drehzahl regulierbar ist, montiert sind, die wiederum am Tragrahmen (7) befestigt ist.

8. Gülleausbringvorrichtung (1) nach einem der vorstehenden Ansprüche, **dadurch gekennzeichnet, dass** an das Ende der Schlauchpumpen (10) Y-Verteilerstutzen (22) mit mindestens zwei Ausläufen montiert werden können.

9. Gülleausbringvorrichtung (1) nach einem der vorstehenden Ansprüche, **dadurch gekennzeichnet, dass** der Teil des Tragrahmen (7), der Wellen (11) der Schlauchpumpen (10) und des Querverteilungsrohrs (6), der über die Breite des Güllebehälters (3) hinausragt, koppelbar sind und für den Straßentransport nach oben geklappt und alle drei Teile des Tragrahmens in Richtung des Güllebehälters (3) gekippt werden können, sodass der Tragrahmen nach dem Kippen an einem Fanghaken (17) am Güllebehälter (3) befestigt werden kann.

10. Gülleausbringvorrichtung (1) nach einem der vorstehenden Ansprüche **dadurch gekennzeichnet, dass** die Schlauchpumpen (10) mindestens einzeln oder in zusammengefassten Teilbereichen über jeweils separate Antriebe (26) gesteuert und geregelt werden, um die Querverteilung über die Arbeitsbreite zu beeinflussen.
